Europäisches Patentamt

European Patent Office

Office européen des brevets

(19)

(11) Veröffentlichungsnummer : **0 146 858
B1**

(12) **EUROPÄISCHE PATENTSCHRIFT**

(45) Veröffentlichungstag der Patentschrift :
20.09.89

(21) Anmeldenummer : 84114986.7

(22) Anmeldetag : 08.12.84

(51) Int. Cl.⁴ : **G 01 S   7/38**

(54) Flugkörper zur Störung von bodengebundenen Sende-Empfangs-Einrichtungen.

(30) Priorität : 21.12.83 DE 3346155

(43) Veröffentlichungstag der Anmeldung :
03.07.85 Patentblatt 85/27

(45) Bekanntmachung des Hinweises auf die Patenterteilung : 20.09.89 Patentblatt 89/38

(84) Benannte Vertragsstaaten :
DE FR GB IT

(56) Entgegenhaltungen :
DE—A— 2 820 492
DE—A— 3 106 032
US—A— 3 760 417
US—A— 3 879 732
US—A— 4 025 920
US—A— 4 264 909

(73) Patentinhaber : Licentia Patent-Verwaltungs-GmbH
Theodor-Stern-Kai 1
D-6000 Frankfurt/Main 70 (DE)

(72) Erfinder : Kuhrdt, Günther
Schützenweg 19
D-7915 Elchingen 1 (DE)

(74) Vertreter : Schulze, Harald Rudolf, Dipl.-Ing. et al
Licentia Patent-Verwaltungs-GmbH Theodor-Stern-
Kai 1
D-6000 Frankfurt/Main 70 (DE)

EP 0 146 858 B1

## Beschreibung

Die Erfindung betrifft einen Flugkörper zur Störung von bodengebundenen Sende-Empfangs-Einrichtungen, insbesondere Radaranlagen, nach dem Oberbegriff des Patentanspruchs 1.

In der DE-A-2 820 492 ist ein in einem Flugzeug angeordnetes elektronisches Abwehrsystem zur Störung bodengebundener Radaranlagen beschrieben. Die Antenneanordnung des Abwehrsystems weist mehrere unterschiedliche ausgerichtete Richtdiagramme auf, denen je eine Einzelantenne zugeordnet ist. Jede der Antennen ist mit einem Empfänger und mit einer Parametermeßeinheit zur Ermittlung mehrerer Parameter eines einfallenden Signals verbunden. Als Signalparameter werden beispielsweise Frequenz, Impulsbreite, Ankunftszeit, Amplitude und Einfallswinkel (Einzelantenne) eines aufgenommenen Signals ermittels, in Digitalwörter umformt und in einen Speicher eingeschrieben. Um aus einer Vielzahl empfangener Signale die von ein und derselben Strahlungsquelle herrührenden Empfangssignale als solche zu erkennen und gemeinsam auswerten zu können, wird eine Vorsortierung in der Weise vorgenommen, daß der Digitalwert der ermittelten Signalfrequenz als Adresse für den Speicher herangezogen wird und die die übrigen Signalparameter enthaltenden Digitalwörter unter dieser Adresse in den Speicher eingeschrieben werden. Eine Auswerteeinrichtung wählt auf der Grundlage des Speicherinhalts geeignete Gegenmaßnahmen aus und erzeugt entsprechende Steuersignale für Sendeeinrichtungen zur Abstrahlung von Störsignalen.

Die DE-A-3 106 032 beschreibt eine Störsendeeinrichtung zum Stören fremder Funkbetriebe, bei der mit einem Suchempfangssystem feststellbar ist, auf welcher Frequenz und in welcher Richtung eine zu störende Funkverbindung arbeitet, und bei der ein auf die festgestellte Sendefrequenz abstimmbarer Breitband-Störsender mit einer in die zu störende Richtung weisenden Breitband-Richt-antenne verbunden werden kann. Zur Optimierung der Störleistung sind mehrere in unterschiedliche Richtungen weisende Richtantennen vorgesehen, die über eine Umschalteinrichtung zur Frequenz- und Richtungsbestimmung mit dem Suchempfangssystem verbindbar sind und von denen im Störsendebetrieb nur die in die zu störende Richtung weisende Richtantenne an den Störsender angeschaltet wird.

Der Erfindung liegt die Aufgabe zugrunde, einen Flugkörper der im Oberbegriff des Patentanspruchs 1 genannten Art anzugeben, der bei einfachem Aufbau zur Störung auch mehrerer gleichzeitig betriebener bodengebundener Einrichtungen eingesetzt werden kann.

Die Erfindung ist im Patentanspruch 1 beschrieben. Die Unteransprüche enthalten vorteilhafte Ausgestaltungen und Weiterbildungen der Erfindung.

Bei Vorhandensein einer Vielzahl bodengebundener Anlagen werden u. U. innerhalb eines Azimutsektors, i. e. über eine Antenne gleichzeitig Signale von mehreren Bodenanlagen empfangen und detektiert. Es wird in einem solchen Fall im Interesse einer effektiven Störstrategie meistens vorteilhaft sein, die Störung in diesem Sektor auf die Frequenzkanäle zu beschränken, die mit den größten Amplituden detektiert werden. Andererseits kann eine einzige Bodenstation durch Nebenkeulenempfang in mehreren Azimutsektoren detektiert werden. Es ist deshalb im Interesse der Nebenkeulenunterdrückung vorteilhaft, die Amplituden gleichfrequenter Empfangssignale aus verschiedenen Azimutsektoren zu vergleichen und z. B. nur auf das stärkste oder die zwei stärksten mit einem Störsignal zu antworten. Hierzu ist ein Amplitudendiskriminator im Empfänger des Flugkörpers vorhanden. Die Amplituden werden bis zum Ende der laufenden Empfangsphase gespeichert, danach werden Speichereintragungen, die nach dem vorstehend beschriebenen Prinzip kein Störsignal auslösen sollen, vor Beginn der Sendephase gelöscht. Der Speicher ist hierzu als Matrix organisiert mit Antennennummer als Zeilenadresse und Frequenz als Spaltenadresse. Die Anzahl der Spalten ergibt sich aus der Auflösung der Frequenzbestimmung. Wird die Frequenz beispielsweise als 8 bit-Wort vom Frequenzdiskriminator angegeben, so sind im Speicher maximal 256 Frequenzspalten bereitzuhalten. Der Speicher wird vor jeder neuen Empfangsphase gelöscht.

Durch die Frequenz- und Richtungsselektivität bei der Ausstrahlung in Verbindung mit der Antennenumschaltung ergibt sich mit minimalem Aufwang eine leistungsstarke Störung, die für innerhalb eines großen Gebiets betriebene Sende-/Empfangsanlagen eine erhebliche Erhöhung ihrer Falschalarmrate und damit Herabsetzung ihrer Entdeckungswahrscheinlichkeit, Genauigkeit oder Übertragungssicherheit bewirkt.

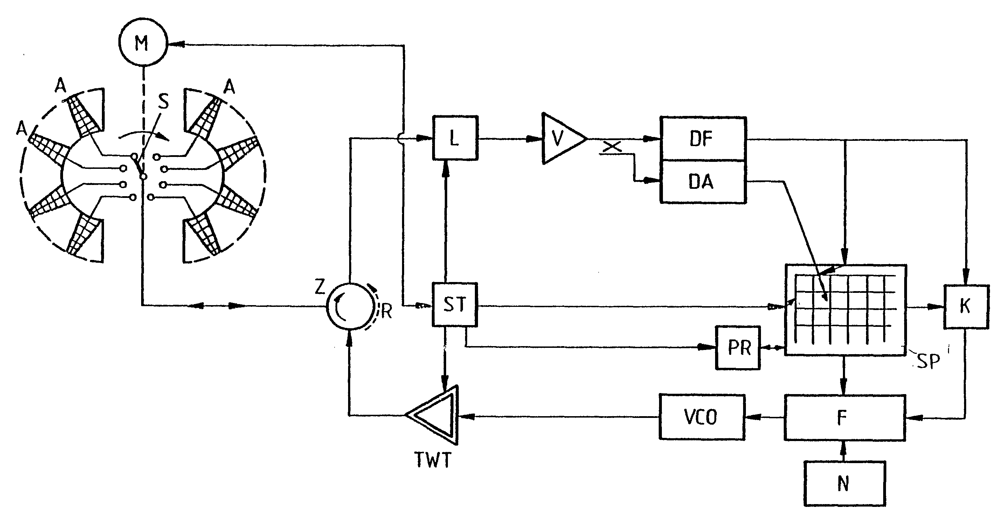

Die Erfindung ist nachfolgend unter Bezugnahme auf die Abbildung an einem Ausführungsbeispiel veranschaulicht.

Die acht einzelnen Sende-Empfangs-Antennen A der Antennenanordnung, die vorzugsweise in der Technik gedruckter Schaltungen ausgeführt sind, werden durch einen mechanischen, von einem Motor M getriebenen Umschalter S sequentiell umgeschaltet. Bei einer Umlauffrequenz des Umschalters von 1 500 UPM ergibt sich eine Abtastfrequenz von 25 Hz bsw. eine Umlaufdauer von 40 ms, so daß jedes Antennenelement pro Umlauf 5 ms lang in Betrieb ist. Die Zeitsteuereinrichtung ST schaltet das System dabei jeweils für einen Umlauf des Umschalters auf Empfang und anschließend für einen oder mehrere Umläufe auf Sender. Alternativ dazu können auch elektronische Schaltmittel, wie z. B. PIN-Dioden, als Umschalteinrichtung vorgesehen sein, die von der Zeitsteuereinrichtung ST betätigt werden. Während der Empfangsphase wird der Senderverstärker TWT ausgetastet und der Empfängereingang geöffnet. Empfangene Signale, die von den Antennen über den Zirkulator Z auf den Empfänger gelangen, werden über einen Eingangsverstärker V auf einen Frequenzdiskriminator DF und einen Amplitudendiskriminator DA gegeben. Der Frequenzdiskriminator gibt die Frequenz oder ggf. die mehreren Frequenzen des Eingangssignals als 8 bit-Wort(e) an den Speicher SP, der als Matrix organisiert ist und nach der Ausgansinformation des Frequenzdiskriminators die dieser Frequenz entsprechende Speicherspalte adressiert. Der Speicher ist auch mit der Zeitsteuerung ST verbunden, von der er die Nummer der gerade angeschlossenen Antennen als Zeileninformation erhält. Auf den durch Zeile und Spalte festgelegten Matrixspeicherplatz wird der zugehörige, im Amplitudendiskriminator bestimmte Amplitudenwert als 4 bit-Wort eingeschrieben.

Nach Beendigung einer Empfangsphase wird vor Beginn der Sendephase der Matrixspeicher von einem Prozessor PR in zwei Arbeitsgängen aufgearbeitet. Innerhalb einer Spalte werden alle Amplitudenwerte bis auf den absoluten Größtwert oder zwei von mehreren gleichgroßen Größtwerten zur Elimination des Einflusses von Nachbarsektor- oder Nebenzipfeleinstrahlungen gelöscht. Innerhalb einer Zeile wird die Zahl der Eintragungen auf z. B. die vier größten Werte entsprechend den vier Kanälen mit den besten Empfangseigenschaften beschränkt.

Während der Sendephase wird der Senderverstärker TWT für Dauerstrichbetrieb aufgetastet und das Sendesignal über den Zirkulator Z auf die gerade angeschaltete Antene gegeben. Für die jeweils anliegende Antenne wird die zugehörige Zeile des Matrix-Speichers als Frequenzstellkommando ausgelesen, wobei bei Vorliegen mehrerer Speicherwerte innerhalb dieser Zeile die Sendezeit auf die verschiedenen Frequenzen aufgeteilt wird. Die Verweilzeit bei den einzelnen Frequenzkanälen kann nach den eingeschriebenen Amplitudenwerten gewichtet werden, so daß Ziele in günstigem Aspektwinkel besonders nachhaltig gestört werden.

Das Frequenzstellkommando aus dem Matrixspeicher wird in einer Frequenzsteuerung F in ein Oszillatoransteuersignal zur Abstimmung eines frequenzvariablen Oszillators VCO umgewandelt.

Die Restkopplung R des Zirkulators Z genügt, um den Empfänger, der während der Sendephase zusätzlich über einen Begrenzer L gesperrt ist, mit einer Probe des Ausgangssignals zu versorgen, so daß der Frequenzdiskriminator-Ausgang mit einem Korrektur-Diskriminator K, der den für das Sendesignal ermittelten Frequenzwert mit dem Einstellwert aus dem Matrix-Speicher vergleicht und bei Abweichung ein Korrektur-Signal abgibt, in eine Regelschleife zur digitalen Feinregelung der Frequenz des frequenzvariablen Oszillators VCO einbezogen werden kann.

Dem Oszillatoransteuersignal kann ein Rauschsignal von einer Rauschquelle N zur Spektrumsverbreitung oder ein beliebiges anders frequenzmodulierendes Signal überlagert werden.

**Patentansprüche**

1. Flugkörper mit Mitteln zur Störung bodengebundener Sende-Empfangs-Einrichtungen, insbesondere von Radaranlagen, welche Mittel folgende Einrichtungen umfassen :
— eine Antennenanordnung aus mehreren einzelnen Sende-Empfangs-Antennen (A), deren Richtdiagramme bei Normalfluglage des Flugkörpers verschiedene Azimutsektoren abdecken,
— Empfangseinrichtungen (L, V),
— Sendeeinrichtungen (TWT, VCO) zur Erzeugung von Störsignalen,
— einen Frequenzdiskriminator (DF) zur Erzeugung von digitalen Ausgangssignalen, welche die Frequenz der von den Sende-Empfangs-Antennen jeweils empfangenen Signale repräsentieren,
— Speichereinrichtungen (SP) zur Speicherung von Amplitudenwerten der mit den Sende-Empfangs-Antennen empfangenen Signale an von den digitalen Ausgangssignalen des Frequenzdiskriminators bestimmten Plätzen, und
— Auswerteeinrichtungen (ST, PR, K, F) zur Ableitung von Steuersignalen für die Sendeeinrichtungen anhand der gespeicherten Amplitudenwerte, gekennzeichnet durch
— eine Sende-Empfangs-Weiche (Z) zur Weiterleitung der Ausgangsignale der Sendeeinrichtungen an die Antennenanordnung sowie der von der Antennenanordnung empfangenen Signale an die Empfangseinrichtungen, welche von einem allen Sende-Empfangs-Antennen gemeinsamen Empfänger (L, V) gebildet sind,
— eine Umschalteinrichtung (S), über welche die einzelnen Sende-Empfangs-Antennen (A) der Antennenanordnung nacheinander mit dem antennenseitigen Ausgang der Sende-Empfangs-Weiche (Z) verbindbar sind,
— eine Zeitsteuereinrichtung (ST), welche die Sendeeinrichtungen und die Empfangseinrichtungen im Wechsel miteinander in voneinander getrennten Sende- bzw. Empfangsphasen aktiviert und die Umschalteinrichtung so steuert, daß jede Sende-Empfangs-Antenne in jeder Empfangsphase jeweils einmal mit der Sende-Empfangs-Weiche verbunden ist, während in jeder Sendephase zumindest die zur Abstrahlung von Störsignalen dienenden Sende-Empfangs-Antennen der Reihe nach an die Sende-Empfangs-Weiche angeschlossen werden,
— einen die Speichereinrichtungen bildenden Matrixspeicher (SP), zur Speicherung der Amplitudenwerte an Speicherplätzen, deren Spaltenadressen von den digitalen Ausgangssignalen des Frequenzdiskriminators (FD) gebildet sind und deren Zeilenadressen in Abhängigkeit von der jeweils mit dem Empfänger verbundenen Sende-Empfangs-Antenne bestimmt werden,
— einen in den Sendeeinrichtungen zur Erzeugung der Störsignale enthaltenen Oszillator (VCO) variabler Frequenz zur Erzeugung der Störsignale,

— eine in der Auswerteschaltung enthaltene Frequenzsteuerung (K, F) zur Abstimmung des Oszillators während jeder Sendephase jeweils auf die Frequenz, für die in der Zeile des Matrixspeichers, die der momentan über die Umschalteinrichtung an die Sendeeinrichtung angeschlossenen Sende-Empfangs-Antenne zugeordnet ist, ein Amplitudenwert enthalten ist.

2. Flugkörper nach Anspruch 1, gekennzeichnet durch eine Prozessoreinrichtung (PR), die zwischen einer Empfangsphase und der folgenden Sendephase die Eintragungen im Matrixspeicher für jede Zeile und/oder jede Spalte auf die jeweils amplitudenstärksten Werte beschränkt und die übrigen Eintragungen löscht.

3. Flugkörper nach Anspruch 1 oder 2, dadurch gekennzeichnet, daß die Sende-Empfangs-Weiche ein Zirkulator (Z) ist, über den aufgrund der Zirkulatorrestkopplung ein geringer Teil des vom Oszillator erzeugten Störsignals zum Empfänger gelangt, und daß die Frequenzsteuerung mit dem Frequenzdiskriminator (DF), dem Matrixspeicher (SP) und einem Korrektur-Diskriminator (K) einen Frequenzregelkreis für den Oszillator bildet.

4. Flugkörper nach einem der Ansprüche 1 bis 3, dadurch gekennzeichnet, daß die Umschalteinrichtung (S) ein mechanisch rotierender Schalter mit konstanter Umlaufgeschwindigkeit ist, der die Sende-Empfangs-Antennen in der Sende- und der Empfangsphase für gleichlange und konstante Zeitabschnitte mit den Sendeeinrichtungen bzw. dem Empfänger verbindet.

5. Flugkörper nach Anspruch 4, dadurch gekennzeichnet, daß die Sendephase mehrere aufeinanderfolgende Schalterumläufe umfaßt.

6. Flugkörper nach einem der Ansprüche 1 bis 3, dadurch gekennzeichnet, daß die Umschalteinrichtung elektronische Schalter enthält, die von der Zeitsteuereinrichtung (ST) betätigt werden.

7. Flugkörper nach Anspruch 6, dadurch gekennzeichnet, daß die Zeitsteuereinrichtung (ST) mit dem Speicher (SP) so gekoppelt ist, daß während der Sendephase nur diejenigen Antennen, für die eine Eintragung im Speicher vorliegt, mit dem Sender verbunden werden.

8. Flugkörper nach einem der Ansprüche 4 bis 7, dadurch gekennzeichnet, daß bei Vorliegen von Amplitudeneinträgen im Speicher zu mehr als einem Frequenzwert bei derselben Antenne während der Sendephase die Aussendung verschiedenfrequenter Signale in getrennten Zeitabschnitten erfolgt.

9. Flugkörper nach einem der Ansprüche 1 bis 8, gekennzeichnet durch eine Rauschquelle (N) in der Frequenzsteuerung zur Spektrumsverbreiterung des gesendeten Störsignals.

## Claims

1. Projectile with means for the jamming of ground-based transmit-receive equipments, in particular of radar installations, which means comprise the following equipments :
— an aerial arrangement of several individual transmit-receive aerials (A), the directional diagrams of which in normal flight of the projectile cover different azimuth sectors,
— receiving equipments (L, V),
— transmitting equipments (TWT, VCO) for the generation of interference signals,
— a frequency discriminator (DF) for the production of digital output signals which represent the frequency of the signals respectively received from the transmit-receive aerials,
— storage equipments (SP) for the storage of amplitude values of the signals received by the transmit-receive aerials at places determined by the digital output signals of the frequency discriminator and
— evaluating equipments (ST, PR, K, F) for the derivation of control signals for the transmitting equipments with the aid of the stored amplitude values, characterised by
— a transmit-receive filter (Z) for passing the output signals of the transmitting equipments onto the aerial arrangement as well as the signals received from the aerial arrangement on to the receiving equipments which are formed by a receiver (L, V) common to all transmit-receive aerials,
— a change-over switching equipment (S), by way of which the individual transmit-receive aerials (A) of the aerial arrangement are connectable one after the other with the aerial end output of the transmit-receive filter (Z),
— a timing control equipment (ST), which activates the transmitting equipments and the receiving equipments each in alternation with the other in mutually separate transmitting and receiving phases and so controls the change-over switching equipment that each transmit-receive aerial is connected in each receiving phase just once with the transmit-receive filter, whilst at least the transmit receive aerials, which serve for the radiation of interference signals, are connected in sequence to the transmit-receive filter in each transmitting phase,
— a matrix store (SP), which forms the storage equipments, for the storage of the amplitude values at storage places, the column addresses of which are formed by the digital output signals of the frequency discriminator (FD) and the line addresses of which are determined in dependence on the respective transmit-receive aerial connected with the receiver,
— an oscillator (VCO), which is contained in the transmitting equipments for the generation of the interference signals, of variable frequency for the generation of the interference signals,
— a frequency control (K, F), which is contained in the evaluating circuit, for the tuning of the oscillator during each transmitting phase to the respective frequency, for which an amplitude value is contained in that line of the matrix store, which is associated with the transmit-receive aerial instantaneously connected by way of the change-over switching equipment to the transmitting equipment.

2. Projectile according to claim 1, characterised by a processor equipment (PR), which between a receiving phase and the following transmitting phase restricts the entries in the matrix store for each line and/or each column to the respective values of greatest amplitude and erases the remaining entries.

3. Projectile according to claim 1 or 2, characterised thereby, that the transmit-receive filter is a circulator (Z), by way of which a small part of the interference signal generated by the oscillator gets to the receiver by reason of the residual circulator coupling, and that the frequency control together with the frequency discriminator (DF), the matrix store (SP) and a correction discriminator (K) forms a frequency-regulating circuit for the oscillator.

4. Projectile according to one of the claims 1 to 3, characterised thereby, that the change-over switching equipment (S) is a mechanically rotating switch of constant speed of rotation and connects the transmit-receive aerials with the transmitting equipments and the receiver respectively for equally long and constant time portions in the transmitting phase and in the receiving phase.

5. Projectile according to claim 4, characterised thereby, that the transmitting phase comprises several successive rotations of the switch.

6. Projectile according to one of the claims 1 to 3, characterised thereby, that the change-over switching equipment contains electronic switches which are actuated by the timing control equipment (ST).

7. Projectile according to claims 6, characterised thereby, that the timing control equipment (ST) is so coupled with the store (SP) that only those aerials, for which an entry is present in the store, are connected with the transmitter during the transmitting phase.

8. Projectile according to one of the claims 4 to 7, characterised thereby, that the emission of signals of different frequency takes place in separate time sections during the transmitting phase on the presence of amplitude entries in the store at more than one frequency value for the same aerial.

9. Projectile according to one of the claims 1 to 8, characterised by a noise source (N) in the frequency control for the spreading of the spectrum of the emitted interference signal.

## Revendications

1. Engin volant comportant des moyens pour perturber des installations terrestres d'émission-réception, notamment des installations de radar, lesdits moyens comportant les dispositifs suivants :

— un agencement d'antenne fait de plusieurs antennes individuelles d'émission-réception (A) dont les diagrammes directionnels recouvrent différents secteurs azimutaux lorsque l'engin volant est en position de vol normale,

— des dispositifs de réception (L, V),

— des dispositifs d'émission (T, WT, VCO) pour produire des signaux perturbateurs,

— un discriminateur de fréquence (DF) pour produire des signaux de sortie numériques qui représentent la fréquence des signaux reçus par les antennes d'émission-réception,

— des dispositifs de mémoire (SP) pour mémoriser des valeurs d'amplitude des signaux reçus par les antennes d'émission-réception, en des emplacements déterminés par les signaux numériques de sortie du discriminateur de fréquence, et

— des dispositifs d'interprétation (ST, PR, K, F) pour dériver des signaux de commande pour les dispositifs d'émission en tenant compte des valeurs d'amplitude mémorisées, caractérisé par

— un commutateur d'émission-réception (Z) pour acheminer les signaux de sortie des dispositifs d'émission à l'agencement d'antenne, et les signaux reçus de l'agencement d'antenne aux dispositifs de réception qui sont constitués par un récepteur (L, V) commun à toutes les antennes d'émission-réception,

— un dispositif de commutation (S) par lequel les antennes d'émission-réception individuelles (A) de l'agencement d'antenne peuvent être reliées successivement à la sortie côté antenne du commutateur d'émission-réception (Z),

— un dispositif de commande chronologique (ST) qui active les dispositifs d'émission et les dispositifs de réception en alternat mutuel, en phases d'émission et réception séparées les unes des autres, et qui commande le dispositif de commutation de manière que chaque antenne d'émission-réception soit reliée, dans chaque phase de réception, dans chaque cas une fois au commutateur d'émission-réception, tandis qu'au cours de chaque phase d'émission au moins les antennes d'émission-réception servant à rayonner des signaux perturbateurs sont raccordées à tour de rôle au commutateur d'émission-réception,

— une mémoire matricielle (SP) formant les dispositifs de mémoire, pour mémoriser les valeurs d'amplitude en des emplacements de mémoire dont les adresses des colonnes sont formées par les signaux numériques de sortie du discriminateur de fréquence (FD) et dont les adresses des lignes sont déterminées en fonction de l'antenne d'émission-réception se trouvant dans le cas considéré reliée au récepteur,

— un oscillateur (VCO) à fréquence variable pour produire les signaux perturbateurs, contenu dans les dispositifs d'émission pour produire les signaux perturbateurs,

— une commande de fréquence (KF) contenue dans le circuit d'interprétation, pour accorder l'oscillateur pendant chaque phase d'émission, à chaque fois sur la fréquence pour laquelle une valeur d'amplitude est contenue dans la ligne de mémoire matricielle qui est associée à l'antenne d'émission-réception momentanément raccordée au dispositif d'émission via le dispositif de commutation.

2. Engin volant selon revendication 1, caractérisé par un dispositif processeur (PR) qui, entre une phase de réception et la phase d'émission suivante, limite les enregistrements dans la mémoire matricielle, pour chaque ligne et/ou chaque colonne, aux valeurs d'amplitude les plus fortes, et efface les enregistrements restants.

3. Engin volant selon revendication 1 ou 2, caractérisé par le fait que le communtateur d'émission-réception est un circulateur (Z) par lequel, du fait du couplage résiduel du circulateur, une faible partie du signal perturbateur produit par l'oscillateur parvient au récepteur, et par le fait que la commande de fréquence forme, avec le discriminateur de fréquence (DF), la mémoire matricielle (SP) et un discriminateur de correction (K) un circuit de réglage de fréquence pour l'oscillateur.

4. Engin volant selon l'une des revendications 1 à 3, caractérisé par le fait que le dispositif de commutation (S) est un commutateur mécanique tournant à vitesse cyclique constante, qui relie les antennes d'émission-réception dans la phase d'émission et de réception, pendant des tranches de temps constantes et de même longueur, aux dispositifs d'émission et respectivement au récepteur.

5. Engin volant selon revendication 4, caractérisé par le fait que la phase d'émission comporte plusieurs cycles de commutateur successifs.

6. Engin volant selon l'une des revendications 1 à 3, caractérisé par le fait que le dispositif de commutation contient des interrupteurs électroniques qui sont actionnés par le dispositif de commande chronologique (ST).

7. Engin volant selon revendication 6, caractérisé par le fait que le dispositif de commande chronologique (ST) est couplé à la mémoire (SP) de manière que, pendant la phase d'émission, seules les antennes pour lesquelles il y a un enregistrement dans la mémoire sont reliées à l'émetteur.

8. Engin volant selon l'une des revendications 4 à 7, caractérisé par le fait qu'en présence d'enregistrements d'amplitude dans la mémoire pour plus d'une valeur de fréquence dans le cas de la même antenne pendant la phase d'émission, l'émission de signaux de fréquences différentes s'effectue dans des tranches de temps séparées.

9. Engin volant selon l'une des revendications 1 à 8, caractérisé par une source de bruit (N) dans la commande de fréquence, pour l'élargissement spectral du signal perturbateur émis.

1